# EUROPÄISCHE PATENTSCHRIFT

(11) **EP 2 030 765 B1**
(45) Veröffentlichungstag und Bekanntmachung des Hinweises auf die Patenterteilung: **30.11.2016**
(21) Anmeldenummer: 08014565.9
(22) Anmeldetag: 16.08.2008
(51) Int. Cl.: B29C 70/86, B60B 1/00, B60B 5/02, B60B 21/06, B60B 21/04, B60B 25/00, B29C 70/84, B60B 1/04

(54) **Verfahren zur Herstellung eines Felgenrings**
Method for producing a rim ring
Procédé de fabrication d'un anneau de jante

(30) Priorität: 29.08.2007 DE 102007042198
(43) Veröffentlichungstag der Anmeldung: 04.03.2009
(73) Patentinhaber: CarbonSports GmbH, 88046 Friedrichshafen (DE)
(72) Erfinder: Theilig, Simon, 88045 Friedrichshafen (DE); Leschik, Thomas, 88046 Friedrichshafen (DE)
(74) Vertreter: Winter, Brandl, Fürniss, Hübner, Röss, Kaiser, Polte - Partnerschaft mbB

(56) Entgegenhaltungen:
- EP-A1- 0 195 418
- EP-A1- 1 764 234
- EP-A2- 1 231 077
- WO-A2-2004/074081
- DE-A1-102005 053 799
- FR-A1- 2 707 559
- FR-A2- 2 583 680
- JP-A- S6 080 902
- US-A1- 2007 029 868

## Beschreibung

Die vorliegende Erfindung betrifft ein Verfahren zur Herstellung eines Felgenrings für eine Reifenfelge, insbesondere für eine Drahtreifenfelge.

Die Erfindung betrifft auch ein Verfahren zur Befestigung von Speichen aus Verbundfaserstoff an einem Felgenring und eine Drahtreifenfelge mit einem Felgenring und Speichen aus Verbundfaserstoff.

Auf dem Gebiet der Fahrradtechnik hat es in den letzten Jahren und Jahrzehnten erhebliche Weiterentwicklungen gegeben. Eines der Ziele, das insbesondere für den Profi-Sport von großem Interesse ist, ist die Reduzierung des Gesamtgewichts des Fahrrads ohne dabei die nötige Stabilität zu kompromittieren. Große Aufmerksamkeit erfährt dabei insbesondere die Fertigung der Felgen. Dies liegt einerseits daran, dass die Felgen einen nennenswerten Anteil am Gesamtgewicht des Fahrrads haben. Insbesondere stellen sie aber eine träge Masse dar, die beispielsweise beim Spurt beschleunigt werden muss und daher so gering wie möglich sein sollte.

Allgemein kann zwischen sogenannten Schlauchreifenfelgen und Drahtreifenfelgen unterschieden werden. Bei den Schlauchreifenfelgen handelt es sich im Wesentlichen um eine Felge mit einer konkaven Außenseite. Auf diese Seite wird ein umlaufender Schlauch aufgeklebt, der damit das Rad komplettiert. Wenngleich sich auf diese Weise besonders leichte Felgen bzw. Räder herstellen lassen, sind für das Herstellen und das Lösen der Klebeverbindung Spezialkenntnisse erforderlich, so dass eine größere Verbreitung dieses Felgentyps bisher nicht stattgefunden hat und derzeit fast ausschließlich im Profi-Sport anzutreffen ist.

Bei der Drahtreifenfelge handelt es sich um eine Felge, bei der radial außen am Felgenaußenprofil Felgenhörner ausgebildet sind. Hinter diese Felgenhörner wird eine stabilisierte Kante eines Reifens gebracht, wobei die Stabilisierung bevorzugt mittels eines umlaufenden Drahts erfolgt. Der Drahtreifen wird mit seinen Kanten durch einen Druck, der im Raum zwischen dem Felgenaußenprofil und dem Drahtreifen aufgebracht wird, gegen die Felgenhörner gedrückt und so in seiner Position gehalten. Da keine Verklebung erfolgt, kann der Reifen auch ohne Spezialkenntnisse gewechselt werden. Bei der Art, wie die Abstützung des Felgenrings an der Nabe erfolgt, sind im Wesentlichen drei Prinzipien zu unterscheiden: die Vollflächenfelge, die Druckspeichenfelge und die Zugspeichenfelge. Bei der Vollflächenfelge befindet sich die Nabe auf beiden Seiten im Zentrum einer Fläche, die jeweils am Felgenring endet. Für die Druckspeichenfelge werden stabile Speichen verwendet, die unter Druckbelastung nicht ausknicken und so eine Druckbelastung vom Felgenring an die Nabe weiterleiten. Im Gegensatz dazu werden bei der Zugspeichenfelge Speichen verwendet, die bei Druckbelastung ausknicken können. Die Zugspeichen sind jedoch bei Zugbelastung stabil, so dass mittels der Zugspeichen die Nabe in praktisch alle Richtungen gegen den Felgenring verspannt wird. Da der Rundlauf der Zugspeichenfelge aber von der Symmetrie der aufgebrachten Spannung abhängt, müssen hier besondere Maßnahmen getroffen werden, um die gleichmäßige Spannung zu erzielen.

Bei den Materialien, die im Felgenbau verwendet werden, sind im Wesentlichen Metalle, insbesondere Aluminium, Kunststoffe und Verbundfaserstoffe, insbesondere Carbon, bekannt. Dabei lassen sich Felgen aus Metall besonders preisgünstig fertigen, wobei jedoch ein relativ hohes Gewicht in Kauf zu nehmen ist. Kunststofffelgen mit Druckspeichen lassen sich verhältnismäßig einfach im Druckgussverfahren herstellen, siehe beispielsweise US 5,184,874 , benötigen jedoch für die erforderliche Stabilität eine relativ große Materialmenge und bieten nur einen eingeschränkten Abrollkomfort. Die besten Ergebnisse hinsichtlich Gewicht und Stabilität lassen sich heutzutage durch Felgen aus Verbundfasern erzielen. Bei Verbundfaserstoffen handelt es sich um Stoffe mit einem faserartigen Grundmaterial, das verformbar ist und erst bei Hinzufügen oder Aktivieren einer Matrix, insbesondere eines Harzes ggf. mit einem Härter, einen festen Verbund entstehen lässt. Insbesondere ist hier Carbon zu nennen, weil die verwendete Carbonfaser besonders leicht und stabil ist. Eine solche Felge mit Zugspeichen ist beispielsweise aus der DE 44 25 592 A1 bekannt. Schließlich sei darauf hingewiesen, dass auch Drahtreifen mit einem Felgenring aus Verbundfaser bekannt sind, siehe EP 1 231 077 A2.

Benachbarter Stand der Technik ist auch aus der EP 0 195 418 A1, der FR 2 583 680 A2, der DE 10 2005 053 799 A1, der EP 1 764 234 A1, der WO 2004/074081 A2 und der US 2007/0029868 A1 bekannt.

Wenngleich im Stand der Technik Möglichkeiten der Gewichtsreduzierung gezeigt werden, ohne dabei die mindestens erforderliche Stabilität zu gefährden, fehlt es immer noch an einer günstig herzustellenden Felge, insbesondere einer Drahtreifenfelge für Zielgruppen außerhalb des Profi-Sports, die nur ein niedriges Gewicht aufweist und insbesondere bei der Verwendung von Zugspeichen keine komplizierten Verstellmechanismen braucht, um die Zentrizität der Nabe relativ zum Felgenring sicherzustellen.

Vor diesem Hintergrund ist es eine Aufgabe der vorliegenden Erfindung, ein Verfahren zur Herstellung eines Felgenrings für eine Reifenfelge mit Verbundfaserstoffen aufzuzeigen, mit dem eine Reifenfelge mit niedrigem Gewicht und guter Stabilität hergestellt werden kann, und einen Felgenring aufzuzeigen, der ein niedriges Gewicht und eine gute Stabilität aufweist.

Die Aufgabe wird gelöst durch ein Verfahren nach Anspruch 1 zur Herstellung eines Felgenrings für eine

Reifenfelge, insbesondere für eine Drahtreifenfelge, mit den folgenden Schritten:
Bereitstellen eines Felgenaußenprofils aus gehärtetem Verbundfaserstoff,
Bereitstellen eines Kunststoffformelements,
Bereitstellen mindestens einer Decklage aus Verbundfaserstoff,
Einlegen des Kunststoffformelements radial innerhalb des Felgenaußenprofils, und
Positionieren der Decklage relativ zum Kunststoffformelement und zum Felgenaußenprofil, so dass sich mindestens ein Teil der Decklage vom Kunststoffformelement auf die Außenseite des Felgenaußenprofils erstreckt.

Ein Aspekt der Erfindung ist darin zu sehen, dass für die Fertigung des Felgenrings ein Felgenaußenprofil aus einem gehärteten Verbundfaserstoff verwendet wird. Dabei kann es sich um ein teilgehärtetes oder um ein bereits vollständig ausgehärtetes Felgenaußenprofil handeln. Maßgeblich ist lediglich, dass das Felgenaußenprofil eine hinreichende Stabilität hat, so dass die nachfolgenden Schritte durchgeführt werden können. Bevorzugt ist das Felgenaußenprofil bereits im Wesentlichen vollständig ausgehärtet. Um den Felgenring aufzubauen, wird ein Kunststoffformelement bereitgestellt, welches im Zusammenspiel mit dem Felgenaußenprofil und den Decklagen den Körper des Felgenrings formen wird. Bei dem Kunststoff kann es sich um einen Schaumstoff handeln, der eine relativ geringe spezifische Dichte hat und dabei gleichzeitig ausreichend stabil ist.

Des Weiteren wird mindestens eine Decklage aus Verbundfaserstoff bereitgestellt, die zusammen mit dem Felgenaußenprofil den Verbundfaserstoffaufbau des Felgenrings darstellen wird. Dabei ist die Decklage bevorzugt so ausgebildet, dass sie an beiden Seiten des Felgenrings am Kunststoffformelement und Felgenaußenprofil anliegen kann. Zudem können zwei Decklagen (oder mehr) verwendet werden, die jeweils an den Seiten des Felgenrings positioniert werden.

Das Herstellen des Felgenaußenprofils aus gehärteten Verbundfaserstoff erfolgt dabei wie es aus dem Stand der Technik bei der Herstellung von Formgegenständen aus Verbundfaserstoff bekannt ist. Dazu wird eine entsprechend geformte Form zur Verfügung gestellt, üblicherweise aus mehreren Formteilen, in die Verbundfasern, insbesondere Verbundfasermatten, eingelegt werden. Die benötigte Matrix kann aufgestrichen werden oder ist bereits bei der Verwendung von vorimprägnierten Verbundfasern (Prepreg, preimpregnated fiber) zwischen den Fasern eingebettet. Nach dem Schließen der Form wird der Härtungsprozess abgewartet, der üblicherweise durch ein Erwärmen der Form beschleunigt wird.

In das Felgenaußenprofil wird dann das Kunststoffformelement eingelegt, und zwar radial innerhalb des Felgenaußenprofils. Begriffe wie "radial innen" oder "radial außen" sollen für eine einheitliche Bezeichnung und eine bessere Verständlichkeit dahingehend verstanden werden, dass das Zentrum des Felgenrings als ein Mittelpunkt verstanden wird und dass verschiedene Elemente des Felgenrings in verschiedenen Radien relativ zu diesem Mittelpunkt angeordnet werden.

Wenn das Kunststoffformelement eingelegt ist, werden Decklagen so auf dem Kunststoffformelement und dem Felgenaußenprofil positioniert, dass sich mindestens ein Teil der Decklagen vom Kunststoffformelement auf die Außenseite des Felgenaußenprofils erstreckt. Dadurch kann im weiteren Verfahren, ähnlich wie beim Zusammenkleben von zwei Papierstücken mit einem Haftstreifen, eine Verbindung hergestellt werden, die zumindest einen Teil des Felgenaußenprofils und zumindest einen Teil des Kunststoffformelements überspannt.

Die Stabilität des Felgenrings wird erst dann erzielt, wenn auch die Decklagen gehärtet werden. Es ist jedoch denkbar, dass vor einem solchen Härten noch weitere Arbeitsschritte am Felgenring durchgeführt werden und das Härten der Decklagen erst zu einem späteren Zeitpunkt im Zusammenhang mit dem Härten anderer Elemente durchgeführt wird.

Das Verfahren kann grundsätzlich für den Felgenring einer Drahtreifenfelge verwendet werden. Soll eine Drahtreifenfelge hergestellt werden, wird ein Felgenaußenprofil gewählt, welches entweder bereits Felgenhörner aufweist oder so geformt ist, dass zu einem späteren Zeitpunkt Felgenhörner herausgearbeitet werden können, beispielsweise durch Sägen, Schleifen oder Fräsen.

Der Felgenring, der sich mittels des beschriebenen Verfahrens herstellen lässt, hat ein niedriges Gewicht, so dass neben den Lagen, die im Felgenaußenprofil verwendet werden, lediglich die Decklagen als weitere Lagen erforderlich sind. Zwar ist es grundsätzlich denkbar, zusätzliche Lagen zur weiteren Stabilisierung bei der Herstellung einzubringen, doch haben Versuche gezeigt, dass auch ohne weitere Lagen eine gute Stabilität erreicht wird.

Einer der besonderen Aspekte, der eine leichte Felge bei guter Stabilität ermöglicht, ist die Verwendung des Kunststoffformelements, welches als Schaumkern ausgeführt ist. Im Rahmen der Erfindung hat sich nämlich herausgestellt, dass bei Verwendung eines Schaumstoffs mit hoher Stabilität die Decklagen verhältnismäßig dünn ausgeführt werden können, da sie aufgrund der Abstützung durch das Kunststoffformelement keine Tendenz haben, unter Belastung auszubeulen. Dabei war es insbesondere überraschend, dass sich trotz des vorhandenen Gewichts des Schaumkerns insgesamt eine Gewichtsersparnis durch die dünneren Decklagen erzielen lässt. Dieser Vorteil wird sich mit der fortschreitenden Entwicklung in der chemischen Industrie, die immer stabilere Schaumstoffe bei gleichem oder geringerem Gewicht hervorbringt, noch verstärken.

Es sei an dieser Stelle darauf hingewiesen, dass die genannten Verfahrensschritte die Schritte darstellen, die insgesamt bei der Herstellung des Felgenrings stattfinden. Es wird durch die Sortierung der Verfahrensschritte jedoch keine feste Reihenfolge vorgeschrieben. Wird bei der Herstellung beispielsweise mit einer von oben zugänglichen Form gearbeitet, so wird bei der Herstellung bevorzugt erst die Decklage für eine Felgenseite eingelegt, dann das Felgenaußenprofil und das Kunststoffformelement, und schließlich die Decklage für die zweite Felgenseite.

Die Decklagen werden bevorzugt ungehärtet aufgelegt bzw. positioniert, da so bei einem nachfolgenden Härteprozess eine besonders gute Verbindung erzielt werden kann.

Es sei auch hier darauf hingewiesen, dass nicht alle Verbundfaserstoffelemente des resultierenden Felgenrings bzw. der resultierenden Drahtreifenfelge aus demselben Verbundfaserstoff gefertigt sein müssen. Vielmehr ist es auch möglich, verschiedene Verbundfaserstoffarten oder verschiedene Untergruppen eines bestimmten Verbundfaserstoffs zu verwenden, solange ein guter Verbund und eine ausreichende Stabilität gewährleistet ist.

Bei einer Ausgestaltung der Erfindung werden die Decklagen gehärtet.

Dadurch entsteht ein stabiler Felgenring mit einem festen Verbund zum Felgenaußenprofil. Das Härten wird insbesondere nach dem Positionieren der Decklagen relativ zum Kunststoffformelement und zum Felgenaußenprofil durchgeführt, sofern nicht weitere Schritte bei der Fertigung des Felgenrings bzw. der Reifenfelge bevorzugt vor diesem Härten durchgeführt werden können.

Das Auflegen der Decklagen erfolgt derart, dass sich die Decklagen auf einen Abschnitt von Felgenhörnern erstrecken, die am Felgenaußenprofil ausgebildet sind.

Auf diese Weise wird eine besonders gute Verbindung zum Felgenaußenprofil erzielt und damit das Felgenaußenprofil besonders gut in den Felgenring eingebunden.

Bei einer weiteren Ausgestaltung der Erfindung ist der Abschnitt die radial nach außen gerichtete Oberfläche der Felgenhörner.

Dies ermöglicht eine nochmalige Verbesserung bei der Befestigung der Decklagen und bei der Befestigung des Felgenaußenprofils im Felgenring. Indem sich die Decklagen auf die Felgenhörner erstrecken, kann die Anbindungsfläche der Decklage am Felgenaußenprofil gesteigert werden.

Bei einer weiteren Ausgestaltung der Erfindung wird das Kunststoffformelement vor dem Einlegen an die radial innere Kontur des Felgenaußenprofils angepasst.

Damit kann das Kunststoffformelement besonders gleichmäßig an das Felgenaußenprofil angelegt werden. So verbleiben einerseits keine Hohlräume im Felgenquerschnitt. Andererseits ist es auch nicht erforderlich, zusätzliches Füllmaterial bereitzustellen, um den Felgenquerschnitt auszufüllen.

Bei einer weiteren Ausgestaltung der Erfindung wird das Kunststoffformelement vor dem Einlegen zumindest bereichsweise ummantelt.

Auf diese Weise kann eine zusätzliche Stabilisierung des Kunststoffformelements erzielt werden. Auf diese Weise bietet sich auch eine einfache Möglichkeit, die Stärke des Verbundfaserstoffes im Bereich des Kunststoffformelements gegenüber dem Bereich des Felgenaußenprofils, insbesondere der Felgenhörner, zu vergrößern.

Bei einer weiteren Ausgestaltung der Erfindung wird das Kunststoffformelement nach dem Härten der Decklagen entfernt.

Wenngleich das Kunststoffformelement derzeit als erheblicher Beitrag zur Stabilität des Felgenrings verstanden wird, ist auch ein Entnehmen des Kunststoffformelements nach dem Härten der Decklagen denkbar. Zu diesem Zeitpunkt hat das Kunststoffformelement nämlich seine Funktion als formgebendes Element bereits erfüllt und kann, sofern Decklagen ausreichend stark ausgeführt sind, entfernt werden, beispielsweise durch Einbringen und Ausspülen mittels eines chemischen Lösungsmittels.

Bei einer weiteren Ausgestaltung der Erfindung ist eine radial äußere Kontur des Kunststoffformelements konkav ausgebildet.

Auf diese Weise kann das Kunststoffformelement besonders gut an das Felgenaußenprofil angepasst werden, wenn dieses bevorzugt konvex, also in Richtung auf den Mittelpunkt des Felgenrings hin, geformt ist.

Bei einer weiteren Ausgestaltung der Erfindung liegt das Kunststoffformelement direkt am Felgenaußenprofil an.

Zwar ist es grundsätzlich möglich, zwischen dem Kunststoffformelement und dem Felgenaußenprofil Zwischenlagen einzulegen, wie beispielsweise eine Trennfolie oder eine zusätzliche Verbundfaserstofflage, doch ist es dank der Erfindung möglich, auf jegliche Lage zwischen Kunststoffformelement und Felgenaußenprofil zu verzichten.

Es ist zudem eine optionale Aufgabe der vorliegenden Erfindung, ein Verfahren zur Befestigung von Speichen, insbesondere Zugspeichen, aus Verbundfaserstoff an einem Felgenring gemäß einem der vorherigen Aspekte aufzuzeigen, das günstig realisiert werden kann und zu einer stabilen Befestigung der Speichen führt, die ein Nachjustieren der Zentrizität nicht mehr erfordert, und eine Drahtreifenfelge mit einem solchen Felgenring aufzuzeigen, an dem Speichen besonders stabil befestigt sind und, die ein Nachspannen bezüglich der Zentrizität überflüssig macht.

Die Aufgabe wird gelöst durch ein Verfahren nach Anspruch 5.

Zunächst wird ein Felgenring bereitgestellt, an dem die Speichen befestigt werden sollen. Dabei ist es bevorzugt, dass der Felgenring zumindest in den Bereichen, in denen die Verbindung mit den Speichen hergestellt werden soll, auch aus Verbundfaserstoff gefertigt ist, um eine besonderes gute Anbindung zu ermöglichen. Bevorzugt ist die gesamte Oberfläche des Felgenrings aus Verbundfaserstoff gefertigt, wobei der Felgenring insbesondere nach einem zuvor beschriebenen Verfahren zur Herstellung eines Felgenrings hergestellt wurde.

Als weitere Elemente werden Speichen und Außenlagen aus Verbundfaserstoff bereitgestellt. Schließlich wird noch ein Zentrumhalter bereitgestellt, der im Zentrum des Felgenrings angeordnet wird. Der Zentrumhalter dient der Festigung der Speichen im Bereich der späteren Nabe. Wenngleich es möglich ist, den Zentrumhalter später gegen eine Nabe auszutauschen, ist es bevorzugt, wenn der Zentrumhalter bereits einen Teil oder mehrere Teile der späteren Nabe darstellt oder aber, dass eine Nabe als Zentrumhalter verwendet wird.

Es werden dann zunächst die Speichen vom Zentrumhalter zum Felgenring gespannt. Dabei ist es nicht erforderlich, dass jede einzelne Speiche als ein von allen anderen Speichen körperlich getrenntes Element ausgeführt ist. So ist es bei einer Ausgestaltung des Verfahrens bevorzugt, zwei Speichen dadurch auszubilden, dass ein Verbundfaserstoffelement vom Felgenring zum Zentrumhalter und vom Zentrumhalter zum Felgenring zurück geführt wird. Ferner ist es bevorzugt, wenn eine Vielzahl von Speichen dadurch ausgebildet wird, dass ein Verbundfaserstoffelement alternierend zwischen Felgenring und Zentrumhalter hin und her geführt wird.

Befinden sich die Speichen an der gewünschten Position, werden Außenlagen so positioniert, dass die Speichen im Bereich des Felgenrings zumindest teilweise von einer Außenlage bedeckt sind. Die Außenlagen dienen beim späteren Härten dazu, die Speichen besonders fest mit dem Felgenring zu verbinden. Außerdem kann mittels der Außenlagen ein geringfügiger Niveauunterschied zwischen den Bereichen des Felgenrings ohne Speichen und Bereichen mit Speichen ausgeglichen werden. Hierzu wird beim Härten vorzugsweise eine ausreichende Menge einer Matrix verwendet, die niveauregulierend wirken kann und die Bereiche auf niedrigerem Niveau, also zwischen den Speichen, ausfüllt. Es entsteht auf diese Weise eine besonders glatte Oberfläche der Außenlagen.

Die Stabilität der Befestigung der Speichen wird erst durch ein Härten erzielt. Es kann aber vorteilhaft sein, vor diesem Härten noch weitere Arbeitsschritte durchzuführen und erst dann die Gesamtheit aller Elemente zu härten.

Bei einer Ausgestaltung der Erfindung werden Felgenring, Speichen und Außenlagen gehärtet.

Dadurch ergibt sich die gewünschte Festigkeit bei der Befestigung der Speichen am Felgenring. Das Härten wird bevorzugt nach dem Positionieren der Außenlagen durchgeführt, sofern nicht noch andere Arbeitschritte, die bevorzugt vor diesem Härten stattfinden, durchgeführt werden sollen.

Bei einer weiteren Ausgestaltung der Erfindung werden die Speichen vor dem Spannen gehärtet.

Auf diese Weise kann der Fertigungsprozess vereinfacht werden. Wenn die Speichen bereits gehärtet oder vorgehärtet sind, muss bei der nachfolgenden Verarbeitung das Härten der Speichen nicht mehr berücksichtigt werden oder kann vereinfacht durchgeführt werden. Außerdem können die Speichen bereits in der gewünschten Form eingelegt werden, so dass eine nachträgliche Formung entfällt.

Bei einer weiteren Ausgestaltung der Erfindung wird ein Bereich der Speichen, der zwischen dem Felgenring und den Außenlagen positioniert wird, zunächst geringer gehärtet oder bleibt ungehärtet.

Dadurch, dass die Speichen im Bereich zwischen dem Felgenring und den Außenlagen geringer gehärtet oder ungehärtet sind, kann beim nachfolgenden Härtevorgang eine besonders sichere Befestigung der Speichen am Felgenring erzielt werden.

Bei einer weiteren Ausgestaltung der Erfindung werden die Speichen zwischen einem Außenhalter und dem Zentrumhalter gespannt, wobei der Außenhalter außerhalb des Felgenrings angeordnet ist.

Auf diese Weise können die Speichen besonders gut gespannt werden. Der Verlauf der Speichen vom Zentrumhalter zum Außenhalter, insbesondere im Bereich des Felgenrings, kann durch entsprechende formgebende bzw. haltende Mittel erreicht werden.

Bei einer weiteren Ausgestaltung der Erfindung liegen die Speichen zumindest auf einem Abschnitt der Felgenhörner.

Dies ermöglicht eine nochmals verbesserte Befestigung der Speichen am Felgenring, insbesondere am Felgenaußenprofil, da die Auflagefläche der Speiche auf dem Felgenring vergrößert wird.

Bei einer weiteren Ausgestaltung der Erfindung ist der Abschnitt die nach außen gerichtete Oberfläche der Felgenhörner.

Auch auf diese Weise wird die Auflagefläche wiederum vergrößert, so dass die Befestigung der Speichen am Felgenring weiter verbessert wird.

Es sei darauf hingewiesen, dass die Speichen nicht direkt auf dem Felgenaußenprofil oder den Felgenhörnern aufliegen müssen. Vielmehr ist es ebenso möglich, dass wenn das Felgenaußenprofil bereits mit einer Lage beschichtet ist, insbesondere der Decklage, die Speichen über die dazwischen liegenden Lage bzw. Lagen am Felgenaußenprofil aufliegen.

Die Verfahren zum Herstellen des Felgenrings und zur Besfestigung von Speichern werden miteinander kombiniert.

Ausführungsbeispiele der Erfindung sind in der Zeichnung näher dargestellt und werden in der nachfolgenden Beschreibung näher erläutert. Es zeigen:
Figur 1 ein Fahrrad mit Drahtreifenfelgen;
Figur 2 eine Drahtreifenfelge mit Speichen;
Figur 3 die vereinfachte Darstellung der Herstellung eines Felgenaußenprofils;
Figur 4 das Positionieren des Kunststoffformelements;
Figur 5 das Positionieren der Decklage;
Figur 6a eine erste Ausführungsform eines Felgenrings mit aufgezogenem Reifenmantel;
Figur 6b eine zweite Ausführungsform eines Felgenrings mit aufgezogenem Reifenmantel;
Figur 6c eine dritte Ausführungsform eines Felgenrings mit aufgezogenem Reifenmantel;
Figur 7 den Querschnitt durch einen Felgenring bei der Befestigung einer Zugspeiche; und
Figur 8 den Querschnitt des Felgenrings beim Aufbringen der Außenlagen und nach dem Freilegen des Innenraums des Felgenaußenprofils.

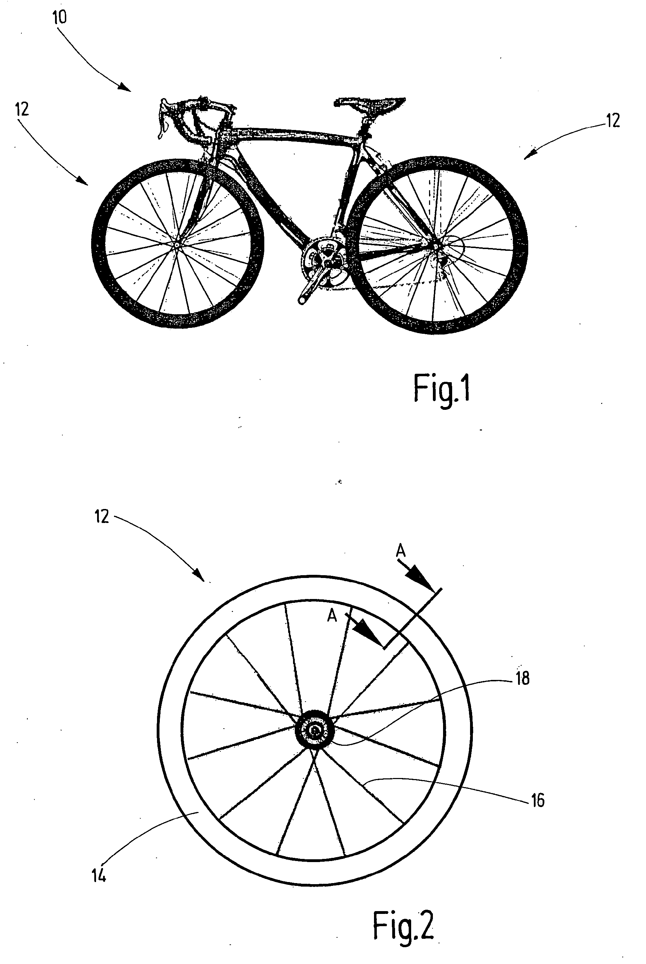

Figur 1 zeigt ein Fahrrad 10 mit zwei Radreifenfelgen 12. Figur 2 zeigt eine Drahtreifenfelge 12 mit einem Felgenring 14, einer Vielzahl von Speichen 16 und einer Nabe 18. Entlang des Felgenrings 14 ist eine Schnittlinie A-A eingezeichnet, um zu verdeutlichen, wie der Querschnitt durch die Felge 12 und insbesondere durch den Felgenring 14 verstanden wird.

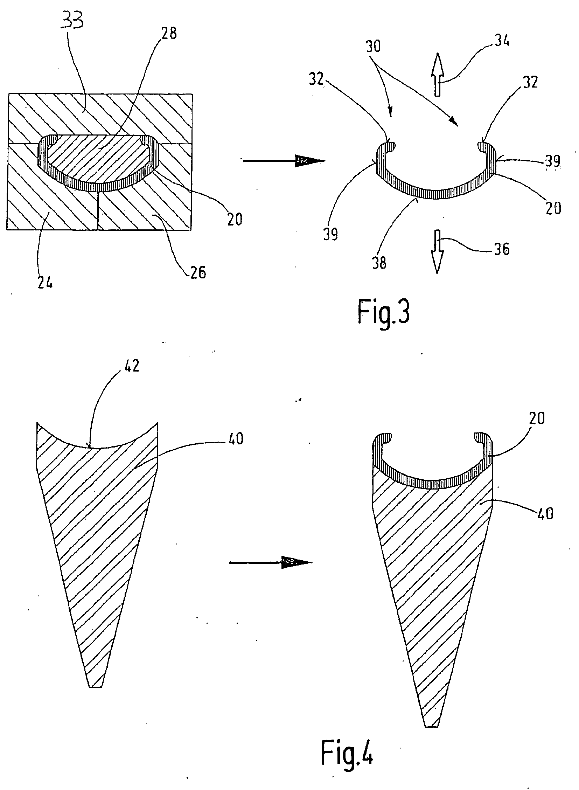

Figur 3 zeigt in stark vereinfachter Darstellung, wie das Felgenaußenprofil 20 hergestellt werden kann. Auf der linken Seite sind eine Manschette 33, eine linke Werkzeughälfte 24 und eine rechte Werkzeughälfte 26 zu sehen, in die Verbundfasern für das Felgenaußenprofil 20 eingelegt sind. Außerdem ist ein Druckstück 28 gezeigt, mit dem bewirkt wird, dass der Verbundfaserstoff für das Felgenaußenprofil 20 sowohl von innen als auch von außen gepresst und in Form gehalten wird. Das Vorgehen bei der Fertigung ist hinlänglich bekannt, wie beispielsweise aus der eingangs erwähnten EP 1 231 077 A2, und soll daher nicht weiter erläutert werden.

Auf der rechten Seite der Figur 3 ist das Ergebnis der Herstellung gezeigt. Es handelt sich um ein Felgenaußenprofil 20 mit Felgenhörnern 30, die am Felgenaußenprofil 20 ausgebildet sind. Dabei weist jedes der Felgenhörner 30 eine radial nach außen gerichtete Oberfläche 32 auf. Die Orientierung "radial nach außen" ist mittels des Pfeils 34 symbolisiert. Die Orientierung "radial nach innen" ist durch den Pfeil 36 symbolisiert. Es ist bevorzugt, dass das Felgenaußenprofil 20 im Wesentlichen vollständig ausgehärtet wird. Dennoch sei darauf hingewiesen, dass es auch möglich ist, das Felgenaußenprofil 20 lediglich teilweise auszuhärten, sofern es dann bereits eine ausreichende Stabilität für die nachfolgenden Fertigungsschritte aufweist.

Das Felgenaußenprofil 20 hat eine radial innere Kontur 38 und weist des Weiteren zwei Außenseiten 39 auf, also die Seiten, die im Wesentlichen in seitliche Richtung weisen.

Figur 4 zeigt, wiederum im Querschnitt, das Bereitstellen eines Kunststoffformelements 40 und das Einlegen des Kunststoffformelements 40 radial innerhalb des Felgenaußenprofils 20.

Wie insbesondere aus der linken Seite der Figur 4 gut zu erkennen ist, ist eine radial äußere Kontur des Kunststoffformelements 40 konkav ausgebildet. Wie aus der rechten Seite der Figur 4 zu erkennen ist, liegt damit das Kunststoffformelement 40 direkt am Felgenaußenprofil 20 an.

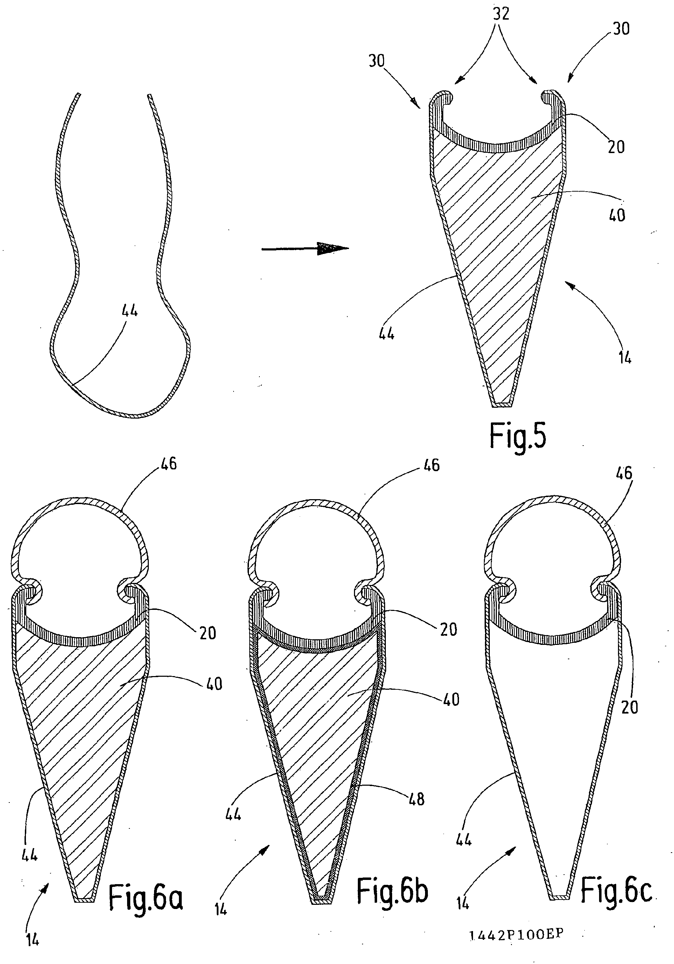

Figur 5 zeigt, wieder im Querschnitt, auf der linken Seite eine Decklage 44 aus Verbundfaserstoff. Die Decklage 44 ist mit geschwungenen Linien gezeichnet, um anzuzeigen, dass die Decklage 44 vor dem Positionieren ungehärtet ist. Die Decklage 44 wird so relativ zum Kunststoffformelement 40 und zum Felgenaußenprofil 20 positioniert, dass mindestens ein Teil der Decklage 44, hier die gesamte Decklage 44, sich vom Kunststoffformelement 40 auf die Außenseite des Felgenaußenprofils 20 erstreckt. Dabei ist es hier insbesondere so, dass sich die Decklage 44 auf die Felgenhörner 30 erstreckt, dabei im Speziellen auf die radial nach außen gerichtete Oberflächen 32. Auf diese Weise wird eine besonders gute Anbindung bzw.

### Befestigung erzielt.

Figur 6a zeigt eine erste Ausführungsform des Felgenrings 14, die sich aus den bislang erläuterten Schritten ergeben hat. Es ist zu erkennen, dass bei dieser Ausführungsform kein Trennelement zwischen dem Felgenaußenprofil 20 und dem Kunststoffformelement 40 angeordnet ist. Demnach verlaufen auch keine Fasern der Decklage in dem Bereich zwischen Felgenaußenprofil 20 und Kunststoffformelement 40.

Figur 6b zeigt im Querschnitt ein zweites Ausführungsbeispiel des Felgenrings 14, wobei hier das Kunststoffformelement 40 mit einem Mantel 48 umgeben ist. Es ist auch möglich, den Mantel 48 lediglich bereichsweise auf das Kunststoffformelement 40 aufzubringen.

Figur 6c zeigt im Querschnitt ein Ausführungsbeispiel des Felgenrings 14, bei dem das Kunststoffformelement 40 abschließend entfernt wurde.

Damit wurde das Verfahren zur Herstellung eines Felgenrings 14 beschrieben.

Insbesondere in der bevorzugten Ausführungsform gemäß Figur 6a, hat der Felgenring 14 ein niedriges Gewicht bei guter Stabilität.

Nachdem das Verfahren zur Herstellung eines Felgenrings 14 für eine Reifenfelge erläutert wurde, soll nun das Verfahren zur Befestigung von Speichen 16 aus Verbundfaserstoff an dem Felgenring 14 veranschaulicht werden. Dabei werden bevorzugt Zugspeichen verwendet, aber auch Druckspeichen, insbesondere stabile rohrartige Druckspeichen, können wie nachfolgend beschrieben verarbeitet werden.

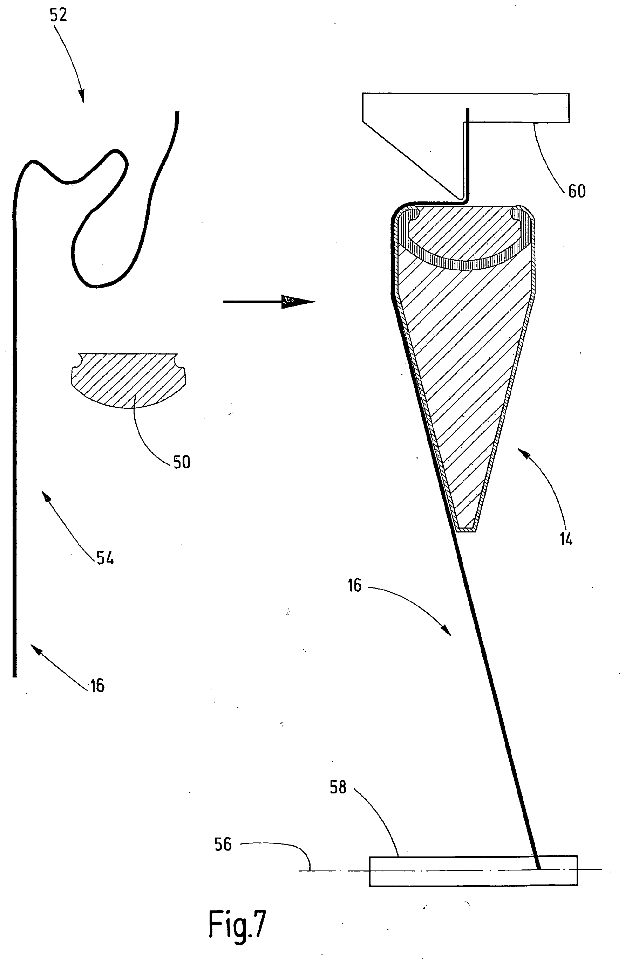

Figur 7 zeigt auf der linken Seite den Verbundfaserstoff für eine Speiche 16 und ein Druckstück 50. Die Speiche 16, die hier beispielhaft für jede der Speichen 16 steht, weist einen Bereich 52 auf, der später zwischen dem Felgenring 14 und Außenlagen positioniert wird. Der Bereich 52 ist mit geschwungenen Linien gezeichnet, um zu symbolisieren, dass der Bereich 52 geringer gehärtet ist oder, bevorzugt, ungehärtet ist, wohingegen der gerade Bereich 54 symbolisiert, dass die Speiche 16 hier stärker gehärtet, insbesondere ausgehärtet ist.

Es ist aber auch möglich, die Speiche 16 bereits mit der Form herzustellen und auszuhärten, die sie später haben soll (wie in der rechten Seite der Figur 7 gezeigt), bevor sie eingelegt wird. Dadurch kann die weitere Verarbeitung und die benötigte Formgebung ggf. vereinfacht werden.

Wie in der rechten Seite der Figur 7 zu erkennen ist, wird das Druckstück 50 in den Felgenring 14 eingesetzt. Dabei handelt es sich jedoch um eine stark vereinfachte Darstellung, da die Verwendung von Druckstücken, sei es aus mehreren Formelementen oder mittels eines Silikoneinsatzes, der mit Druck beaufschlagt wird, gut bekannt ist, siehe die eingangs genannte EP 1 231 077 A2 .

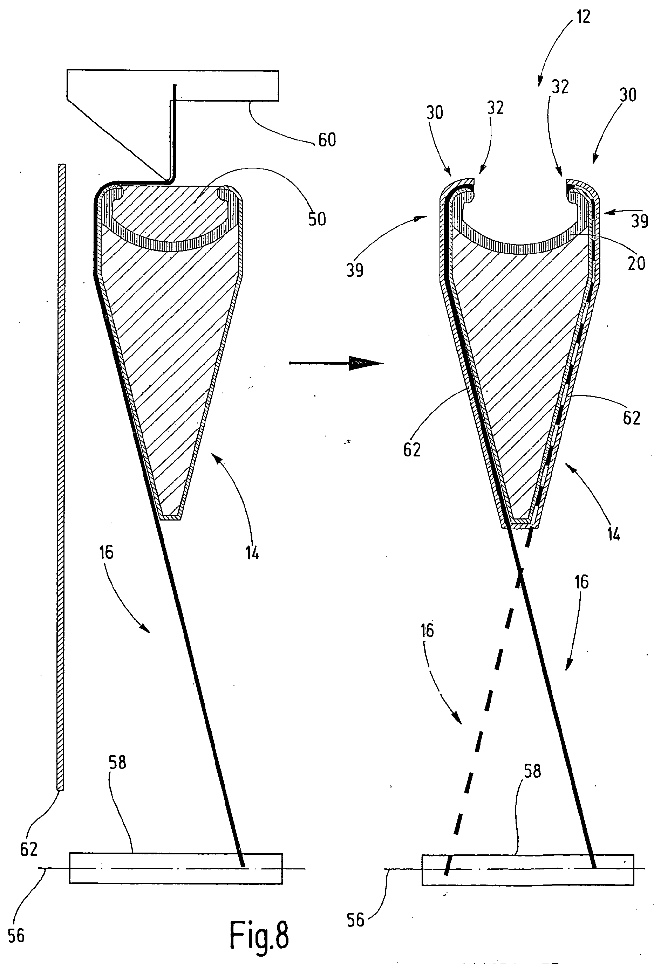

Im Zentrum 56 des Felgenrings 14 ist ein Zentrumhalter 58 bereitgestellt. Außerhalb des Felgenrings 14 ist ein Außenhalter 60 angeordnet. Wie der Figur 7 gut zu entnehmen ist, wird die Speiche 16 zwischen dem Außenhalter 60 und dem Zentrumhalter 58 gespannt. Dabei wird durch eine geeignete Form des Außenhalters 60 sichergestellt, dass die Speiche 16 an der Oberfläche des Felgenrings 14 verläuft. Die Fortsetzung des Verfahrens ist in der Figur 8 gezeigt, in der auf der linken Seite das Bereitstellen einer Außenlage 62 gezeigt ist. Wie auf der rechten Seite der Figur 8 zu erkennen ist, wird die Außenlage 62 auf den Felgenring 14 mit der Speiche gelegt, so dass die Speiche 16 im Bereich des Felgenrings 14 zumindest teilweise, hier vollständig, von der Außenlage 62 bedeckt ist.

Auf der rechten Seite der Figur 8 ist außerdem gezeigt, wie das Zusammenspiel der Speichen 16 auf beiden Seiten des Felgenrings 14 funktioniert (siehe gestrichelt gezeichnete Speiche 16). Ferner ist zu erkennen, dass das Druckstück 50 entnommen wurde. Es sei darauf hingewiesen, dass die Felgenhörner 30 nicht von Anfang an ausgebildet sein müssen. Vielmehr ist es möglich, die Felgenhörner 30 auch erst zum jetzigen Zeitpunkt zu formen.

Schließlich wird ein Härtvorgang durchgeführt, um einen festen Verbund zwischen dem Felgenring 14, den Speichen 16 und der Außenlage 62 zu bewirken.

Die resultierende Drahtreifenfelge 12 hat ein niedriges Gewicht und eine gute Stabilität. Die Speichen 16 sind derart befestigt, dass kein nachträgliches Spannen erforderlich ist. Die Drahtreifenfelge 12 ist zudem günstig in der Fertigung und wird daher für ein größeres Publikum preislich attraktiv. Dabei lassen sich die hier vermittelten technischen Lehren sowohl auf einen symmetrischen wie auch auf einen asymmetrischen Felgenquerschnitt anwenden.

## Patentansprüche

1. Verfahren zur Herstellung eines Felgenrings (14) für eine Reifenfelge, insbesondere für eine Drahtreifenfelge (12), mit den folgenden Schritten:
- Bereitstellen eines Felgenaußenprofils (20) aus gehärtetem Verbundfaserstoff,
- Bereitstellen eines Kunststoffformelements (40),
- Bereitstellen mindestens einer Decklage (44) aus Verbundfaserstoff,
- Einlegen des Kunststoffformelements (40) radial innerhalb des Felgenaußenprofils (20), und
- Positionieren der Decklage (44) relativ zum Kunststoffformelement (40) und zum Felgenaußenprofil (20), so dass sich mindestens ein Teil der Decklage (44) vom Kunststoffformelement (40) auf die Außenseite (30) des Felgenaußenprofils (20) erstreckt,
**dadurch gekennzeichnet, dass**
das Auflegen der Decklage (44) derart erfolgt, dass sich die Decklage (44) auf einen Abschnitt von Felgenhörnern (30) erstreckt, die am Felgenaußenprofil (20) ausgebildet sind.

2. Verfahren nach Anspruch 1, **dadurch gekennzeichnet, dass** der Abschnitt die radial nach außen gerichtete Oberfläche (32) der Felgenhörner ist (30).

3. Verfahren nach einem der vorhergehenden Ansprüche, **dadurch gekennzeichnet, dass** das Kunststoffformelement (40) vor dem Einlegen zumindest bereichsweise mit einem Mantel (48) ummantelt wird.

4. Verfahren nach einem der vorhergehenden Ansprüche, **dadurch gekennzeichnet, dass** das Kunststoffformelement (40) nach dem Härten der Decklage (44) entfernt wird.

5. Verfahren zum Herstellen eines Felgenrings für eine Drahtreifenfelge und zur Befestigung von Speichen (16) mit den folgenden Schritten:
- Herstellen eines Felgenrings (14) für eine Drahtreifenfelge mit den Schritten gemäß einem der Ansprüche 1 bis 4; und
- Befestigen von Speichen (16) aus Verbundfaserstoff an dem Felgenring (14) mit den folgenden Schritten:
o Bereitstellen der Speichen (16) aus Verbundfaserstoff,
o Bereitstellen mindestens einer Außenlage (62) aus Verbundfaserstoff,
o Bereitstellen eines Zentrumhalters (58) im Zentrum (56) des Felgenrings (14),
o Spannen der Speichen (16) vom Zentrumhalter (58) zum Felgenring (14), und
o Positionieren der Außenlage (62), so dass die Speichen (16) im Bereich des Felgenrings (14) zumindest teilweise von der Außenlage (62) bedeckt sind.

6. Verfahren nach Anspruch 5, **gekennzeichnet durch** Härten von Felgenring (14), Speichen (16) und Außenlage (62).

7. Verfahren nach einem der Ansprüche 5 oder 6, **dadurch gekennzeichnet, dass** die Speichen (16) vor dem Spannen gehärtet werden.

8. Verfahren nach einem der Ansprüche 5 bis 7, **dadurch gekennzeichnet, dass** die Speichen (16) zwischen einem Außenhalter (60) und dem Zentrumshalter (58) gespannt werden, wobei der Außenhalter (60) außerhalb des Felgenrings (14) angeordnet ist.

## Claims

1. Method of producing a rim ring (14) for a tyre rim, in particular for a wired tyre rim (12), with the following steps:
- provision of a rim outer profile (20) made of hardened composite fibre material,
- provision of a plastic mould element (40),
- provision of at least one covering layer (44) of composite fibre material,
- insertion of the plastic mould element (40) radially inside the rim outer profile (20), and
- positioning of the covering layer (44) relative to the plastic mould element (40) and to the rim outer profile (20) so that at least one part of the covering layer (44) extends from the plastic mould element (40) to the outside (30) of the rim outer profile (20), **characterised in that** the covering layer (44) is applied in such a way that the covering layer (44) extends to a portion of the rim flanges (30) which are formed on the rim outer profile (20).

2. Method according to claim 1, **characterised in that** the portion is the radially outwardly directed surface (32) of the rim flanges (3).

3. Method according to one of the preceding claims, **characterised in that** before insertion the plastic mould element (40) is covered at least in areas with a casing (48).

4. Method according to one of the preceding claims, **characterised in that** the plastic mould element (40) is removed after the hardening of the covering layer (44).

5. Method of producing a rim ring for a wired tyre rim and of fastening spokes (16) with the following steps:
- production of a rim ring (14) for a wired tyre rim with the steps according to one of claims 1 to 4; and
- fastening of spokes (16) made of composite fibre material to the rim ring (14) with the following steps:
. provision of the spokes (16) made of composite fibre material,
. provision of at least one outer layer (62) of composite fibre material,
. provision of a centre holder (58) in the centre (56) of the rim ring (14),
. tensioning of the spokes (16) from the centre holder (58) to the rim ring (14), and
. positioning of the outer layer (62) so that the spokes (16) are at least partly covered by the outer layer (62) in the area of the rim ring (14).

6. Method according to claim 5, **characterised by** hardening of the rim ring (14), spokes (16) and outer layer (62).

7. Method according to one of claims 5 or 6, **characterised in that** the spokes (16) are hardened before tensioning.

8. Method according to one of claims 5 to 7, **characterised in that** the spokes (16) are tensioned between an outer holder (60) and the centre holder (58), wherein the outer holder (60) is arranged outside the rim ring (14).

## Revendications

1. Procédé de fabrication d'un anneau de jante (14) pour une jante de pneu, en particulier pour une jante de pneu à tringle (12), avec les étapes suivantes :
- mise à disposition d'un profil extérieur de jante (20) en matériau fibreux composite durci,
- mise à disposition d'un élément de mise en forme en plastique (40),
- mise à disposition d'au moins une couche de recouvrement (44) en matériau fibreux composite,
- insertion de l'élément de mise en forme en plastique (40) radialement dans le profil extérieur de jante (20) et
- positionnement de la couche de recouvrement (44) par rapport à l'élément de mise en forme en plastique (40) et au profil d'extérieur de jante (20) de sorte qu'au moins une partie de la couche de recouvrement (44) s'étende de l'élément de mise en forme en plastique (40) sur le côté extérieur (30) du profil extérieur de jante (20), **caractérisé en ce que**
la pose de la couche de recouvrement (44) est effectuée de telle manière que la couche de recouvrement (44) s'étende sur une section de rebords de jante (30) qui sont réalisés sur le profil extérieur de jante (20).

2. Procédé selon la revendication 1, **caractérisé en ce que** la section est la surface (32) dirigée radialement vers l'extérieur des rebords de jante (30).

3. Procédé selon l'une quelconque des revendications précédentes, **caractérisé en ce que** l'élément de mise en forme en plastique (40) est entouré avant l'insertion au moins par endroits par une enveloppe (48).

4. Procédé selon l'une quelconque des revendications précédentes, **caractérisé en ce que** l'élément de mise en forme en plastique (40) est retiré après le durcissement de la couche de recouvrement (44).

5. Procédé de fabrication d'un anneau de jante pour une jante de pneu à tringle et pour la fixation de rayons (16) avec les étapes suivantes :
- fabrication d'un anneau de jante (14) pour la jante de pneu à tringle avec les étapes selon l'une quelconque des revendications 1 à 4 ; et
- fixation de rayons (16) en matériau fibreux composite sur l'anneau de jante (14) avec les étapes suivantes :
- mise à disposition des rayons (16) en matériau fibreux composite,
- mise à disposition d'au moins une couche extérieure (62) en matériau fibreux composite,
- mise à disposition d' un support central (58) au centre (56) de l'anneau de jante (14),
- tension des rayons (16) depuis le support central (58) vers l'anneau de jante (14), et
- positionnement de la couche extérieure (62) de sorte que les rayons (16) soient recouverts au moins en partie dans la zone de l'anneau de jante (14) par la couche extérieure (62).

6. Procédé selon la revendication 5, **caractérisé par** le durcissement de l'anneau de jante (14), des rayons (16) et de la couche extérieure (62).

7. Procédé selon l'une quelconque des revendications 5 ou 6, **caractérisé en ce que** les rayons (16) sont durcis avant la tension.

8. Procédé selon l'une quelconque des revendications 5 à 7, **caractérisé en ce que** les rayons (16) sont tendus entre un support extérieur (60) et le support central (58), le support extérieur (60) étant agencé en dehors de l'anneau de jante (14).
